# EUROPÄISCHE PATENTSCHRIFT

(11) **EP 1 342 897 B1**
(45) Veröffentlichungstag und Bekanntmachung des Hinweises auf die Patenterteilung: **20.02.2008**
(21) Anmeldenummer: 02100230.8
(22) Anmeldetag: 08.03.2002
(51) Int. Cl.: F02D 13/02, F01L 13/00

(54) **Viertakt-Ottomotor mit variabler Ventilsteuerung**
Variable valve control for a four-stroke spark ignition engine
Commande de soupape variable pour moteur à quatre temps à allumage par étincelle

(43) Veröffentlichungstag der Anmeldung: 10.09.2003
(60) Teilanmeldung: 06121780.8
(73) Patentinhaber: Ford Global Technologies, LLC, Dearborn, MI 48126 (US)
(72) Erfinder: Phlips, Patrick Joseph, 50858, Köln (DE)
(74) Vertreter: Drömer, Hans-Carsten

(56) Entgegenhaltungen:
- EP-A- 1 128 029
- DE-A- 2 942 326
- DE-A- 3 436 629
- DE-A- 4 446 725
- JP-A- 2000 073 721
- US-A- 5 233 948
- US-A- 5 586 527
- US-A- 5 931 127
- STEIN R A ET AL: "Dual Equal VCT - A Variable Camshaft Timing Strategy for Improved Fuel Economy and Emissions" SAE TECHNICAL PAPER 950975, 1995, XP008006453
- BOGGS D L ET AL: "The Otto-Atkinson Cycle Engine - Fuel Economy and Emissions Results and Hardware Design" SAE TECHNICAL PAPER 950089, 1995, XP008006455
- BLAKEY S C ET AL: "A Design and Experimental Study of an Otto Atkinson Cycle Engine Using Late Intake Valve Closing" SAE TECHNICAL PAPER 910451, 1991, XP008006456

## Beschreibung

Die Erfindung betrifft einen Viertakt-Ottomotor mit phasenverstellbaren Ventilstellgliedern zum Öffnen und Schließen der Einlassventile und Auslassventile gemäss Anspruch 1, 1.Teil, gemäss DE-A-4 446 725.

In Automobilen verwendete Brennkraftmaschinen mit Fremdzündung ("Ottomotoren") werden hauptsächlich mit einer stöchiometrischen Luft-Kraftstoff-Mischung betrieben, welche eine sehr effiziente Nachbehandlung der Emissionen und eine Drosselung zur Lastregelung erlaubt. Als Kraftstoff wird dabei fast ausschließlich Benzin verwendet. Die bei diesen Motoren mit der Drosselung und dem stöchiometrischen Betrieb bei Teillast verbundenen Kraftstoffverluste können durch einen mageren Betrieb verringert werden. Dieser magere Betrieb kann entweder vom Typ homogen oder vom Typ geschichtet mit Direkteinspritzung sein. In beiden Fällen können die den Motor verlassenden NOx-Emissionen nicht durch einen herkömmlichen Dreiwegekatalysator behandelt werden. Aus diesem Grunde sind Magerbetrieb-NOx-Fallen (LNT) entwickelt worden, mittels derer magere Abgase behandelt werden können. Der Nachteil derartiger, auf Magerbetrieb-NOx-Fallen basierender Systeme besteht darin, dass diese sehr viel teurer als Systeme mit herkömmlichen Dreiwegekatalysatoren sind. Im Falle der geschichteten Direkteinspritzung sind ferner die Systeme für Luftzufuhr, Kraftstoffzufuhr, Abgasrückführung und Zündung insgesamt sehr viel komplexer und daher teurer als bei üblichen Motoren.

Ein alternativer "stöchiometrischer" Ansatz zur Verbesserung des Kraftstoffverbrauches besteht darin, kleinere Motoren mit einem Turbolader (booster) zu versehen. Jedoch sind auch hier die Zusatzkosten für den Turbolader, den Zwischenkühler und deren Einrichtung erheblich.

Für niedrigpreisige Motoren kommen daher die vorstehend genannten Technologien praktisch nicht in Frage. Für diese Motoren ist eine variable Nockenwellensteuerung sinnvoller. Die damit erzielbaren Verbesserungen in der Kraftstoffausnutzung konzentrieren sich jedoch auf den Bereich geringerer Lasten.

Bei der Nockenwellen-Verstellung handelt es sich um eine bekannte Technologie, die zunehmend bei der Produktion von Benzinmotoren mit doppelten obenliegenden Nockenwellen eingesetzt wird. Wenn mit einer Verstellung der Nockenwelle die Öffnungs- und Schließzeiten der angekoppelten Ventile gleichermaßen verschoben werden, spricht man von einer "dual gleichen" Verstellung (Dual Equal VCT). Bei Motoren mit einer einzigen Nockenwelle verbessert die dual gleiche variable Nockenwellensteuerung die Motoremissionen und den Kraftstoffverbrauch. Eine Strategie zur Phasensteuerung derartiger Nockenwellen wird bei Stein et al. (Dual Equal VCT - A Variable Camshaft Timing Strategy for Improved Fuel Economy and Emissions, SAE Technical Paper 950975) erläutert. Der Kraftstoffverbrauch bei Teillast wird durch Hinzufügung von verdünnendem Gas zur Mischung (spätes Schließen des Auslassventils und Öffnen des Einlassventils), durch Erhöhung des effektiven Expansionsverhältnisses (spätes Öffnen des Auslassventils) sowie die Reduzierung der Pumpverluste durch Reduzierung des effektiven Hubraumes (spätes Schließen der Einlassventile) verbessert. Dies alles wird erreicht durch eine Verzögerung des Öffnens sowohl der Auslass- als auch der Einlassventile bei Teillast. Die Einschränkungen dieses Verfahrens bestehen jedoch darin, dass die Verbesserung der Kraftstoffausnutzung auf die untere Hälfte des Lastbereiches konzentriert ist.

Darüber hinaus ist eine als "Atkinsonzyklus" bezeichnete Steuerungstechnik bekannt, durch welche die Motoreffizienz insbesondere bei höheren Lasten gesteigert wird. Eine Definition und Analyse eines Otto-Atkinsonzyklus, der ein variables Schließen der Einlassventile und ein veränderliches Brennkammervolumen erfordert, findet sich bei Luria et al. (The Otto-Atkinson engine, a new concept in automotive economy, SAE Technical Paper 820352) und Boggs et al. (The Otto-Atkinson engine - Fuel Economy and Emission Results and Hardware Design, SAE Technical Paper 950089). In der einfachsten Form erfordert der Atkinsonzyklus nur ein erhöhtes Kompressionsverhältnis und ein spätes Schließen der Einlassventile (vgl. Blakey, S., et al., "A Design and Experimental Study of an Otto Atkinson Cycle Engine Using Late Intake Valve Closing", SAE Technical Paper 910451). In der Praxis werden dabei häufig zusätzliche Konstruktionsänderungen auf der Einlassseite des Motors vorgenommen, um eine optimale Drehmomentkurve des Motors bei Volllast zu erhalten.

Weiterhin sind mechanische Ventilstellglieder mit einer hohen Flexibilität hinsichtlich der Öffnungs- und Schließzeitpunkte sowie des Ventilhubes bekannt, welche einen Betrieb eines Ottomotors ohne Drosselklappen ermöglichen sollen. Die Steuerung der Zylinderfüllung über den Ventilhub erfordert dabei jedoch eine grosse mechanische Präzision in der Ausführung, damit es bei kleinen Hüben nicht zu Ungleichheiten zwischen den verschiedenen Zylindern kommt. Diese Anforderungen verteuern die entsprechenden Systeme, verkomplizieren ihre Wartung und erhöhen die Störanfälligkeit. Weiterhin durchlaufen derartige Systeme beim Übergang von großen Ventilhüben mit herkömmlichen Öffnungszeiten bei Volllast zu kurzen Ventilhüben und Öffnungszeiten bei Teillast stets einen Zwischenbereich, welcher keine funktionellen Vorteile bietet. Da während des üblichen Fahrbetriebes eines Fahrzeuges zahlreiche Übergänge stattfinden, werden die genannten Zwischenbereiche häufig durchlaufen, was dem Fahrer den Eindruck einer verzögerten Systemantwort vermittelt

Aus der EP 1 128 029 B1 ist eine variable Ventilsteuerung für Hubkolbenbrennkraftmaschinen bekannt. Bei der bekannten variablen Ventilsteuerung ist es vorgesehen, die Ventile mit Hilfe von Nockenwellen anzusteuern. Zwischen einer Öffnungsnockenwelle und einer Schließnockenwelle für Einlassventile ist ein Verstellgetriebe vorgesehen, das eine Phasenverschiebung der Schließnockenwelle gegenüber der Öffnungsnockenwelle in Abhängigkeit von Motor- und/oder Fahrzeugparametern ermöglicht. Zudem kann im Antrieb für die Öffnungs- bzw. Schließnockenwelle für die Einlassventile und/oder einer Nockenwelle für Auslassventile von der Kurbelwelle eine Verstellvorrichtung zur Drehwinkelverstellung vorgesehen sein.

Aus der DE 44 46 725 A ist eine Vorrichtung zur Steuerung eines Ventils einer Brennkraftmaschine bekannt, bei der die Nockenkonturen von zwei mit gleicher Drehzahl drehenden Nockenwellen von einer Abtasteinrichtung in der Art eines Addierers abgetastet werden und die Bewegung der Abtasteinrichtung mittels einer Betätigungseinrichtung auf das Ventil übertragen wird.

Vor diesem Hintergrund bestand eine Aufgabe der vorliegenden Erfindung darin, ein robustes und kostengünstiges System und Verfahren zur variablen Steuerung der Einlass- und Auslassventile eines Ottomotors bereitzustellen.

Diese Aufgabe wird durch einen Viertakt-Ottomotor mit den Merkmalen des Anspruchs 1 gelöst.

Vorteilhafte Ausgestaltungen sind in den Unteransprüchen enthalten.

Der erfindungsgemäße Viertakt-Ottomotor enthält ein erstes Ventilstellglied zum Öffnen und Schließen der Auslassventile und zum Öffnen der Einlassventile, wobei das erste Ventilstellglied eine erste Verstelleinrichtung aufweist, über welche seine Phase verstellt und damit das Öffnen und Schließen der Auslassventile und das Öffnen der Einlassventile verzögert beziehungsweise vorgezogen werden kann. Weiterhin enthält der Ottomotor ein zweites Ventilstellglied, das ausschließlich zum Schließen der Einlassventile dient, vorzugsweise aller Einlassventile einer Zylinderreihe, und das eine zweite Verstelleinrichtung zur Veränderung der Phasenlage des Schließzeitpunktes aufweist. Das erste Ventilstellglied ist mit den Einlassventilen gekoppelt, um diese öffnen zu können. Das heißt, dass das erste Ventilstellglied drei Funktionen übernimmt, nämlich das Öffnen und Schließen der Auslassventile sowie das Öffnen der Einlassventile. Der entsprechende Ottomotor kommt daher mit nur zwei Verstellgliedern - wie zum Beispiel zwei Nockenwellen - für die gesamte Steuerung der Ventile aus.

Ein derartiger Viertakt-Ottomotor hat den Vorteil, dass dieser mit nur zwei Ventilstellgliedern und nur zwei zugehörigen Verstelleinrichtungen eine sehr flexible Ansteuerung des Motors erlaubt, welche sowohl bei Teillast als auch bei Volllast einen optimalen Betrieb ermöglicht.

Insbesondere kann mit dem Ottomotor eine dual gleiche Ventilsteuerung vorgenommen werden, bei welcher Einlassventile und Auslassventile parallel verstellt werden, und es kann der Betrieb in einem Atkinsonzyklus mit einem verzögerten Schließen des Einlassventils erfolgen. Die separate Einstellmöglichkeit der Phase des Schließens des Einlassventils kann dabei funktionell auch als ein gegenüber dem Standardprogramm frühes Schließen des Einlassventils eingesetzt werden, wodurch sich die in den Zylinder bei Volllast eintretende Gemischmenge steuern lässt. Der Bereich der Phasenvariation für das Schließen des Einlassventils muss dabei nicht besonders groß sein, so dass sich die Phasenverstellung insbesondere mit herkömmlichen, kostengünstigen Nockenwellen erzielen lässt. Dabei werden kleine Ventilhübe vermieden, so dass geringere Anforderungen an die Präzision bestehen, was sich wiederum positiv auf die Herstellungskosten, den Wartungsaufwand und die Robustheit auswirkt. Weiterhin werden Zwischenbereiche der Einstellung weitgehend vermieden, wodurch sich die Fahreigenschaften verbessern.

Das erste Ventilstellglied wird vorteilhaft durch eine erste Nockenwelle und das zweite Ventilstellglied wird durch eine zweite Nockenwelle gebildet. Nockenwellen haben den Vorteil, bekannte, weitverbreitete, bewährte und kostengünstige Mittel zur variablen Ventilsteuerung zu sein.

Eine der genannten Nockenwellen ist über ihre zugehörige Verstelleinrichtung mit einem Nockenwellen-Antrieb gekoppelt und ist über die andere Verstelleinrichtung der anderen Nockenwelle mit dieser anderen Nockenwelle gekoppelt. Bei dieser Konfiguration wird somit die erste (alternativ: zweite) Nockenwelle von dem Antrieb angetrieben, wobei die zwischengeschaltete erste (zweite) Verstelleinrichtung eine Phasenverschiebung der ersten (zweiten) Nockenwelle relativ zum Antrieb erlaubt. Die erste (zweite) Nockenwelle überträgt dann ihre Drehung auf das zweite (erste) Verstellglied, welches mit der dort eingestellten Phasenverschiebung die zweite (erste) Nockenwelle antreibt. Ein derartiger Aufbau lässt sich sehr kompakt realisieren, da der Antrieb die Nockenwellen quasi kaskadenförmig mit den zwischengeschalteten Verstellgliedern betreibt.

Somit kann ein Verfahren zur Steuerung eines Viertakt-Ottomotors der vorstehend erläuterten Art vorteilhaft durchgeführt werden. Bei Durchführung des Verfahrens wird das Schließen der Einlassventile entsprechend der vom Motor geforderten Leistung verzögert oder vorgezogen. Eine derartige separate Verzögerung oder Frühverstellung des Schließens der Einlassventile ist möglich, da diese mit einem eigenen Ventilstellglied betrieben werden.

Vorzugsweise wird bei Teillast des Motors das Öffnen und Schließen der Auslassventile und das Öffnen der Einlassventile verzögert bzw. nach Spät verstellt. Das Schließen der Einlassventile wird dagegen um etwa den doppelten Betrag der vorhergenannten Verstellung nach Spät verstellt. Hierdurch lässt sich der Kraftstoffverbrauch verbessern, da Verdünnungsgas zum Gemisch hinzugefügt wird, das effektive Expansionsverhältnis erhöht wird und die Pumpverluste verringert werden.

Vorteilhaft kann im Leerlauf des Motors das Schließen der Einlassventile verzögert werden. Dies ist unabhängig von der Verstellung der übrigen Ventilzeiten möglich, da für das Schließen der Einlassventile ein eigenes Ventilstellglied vorgesehen ist.

Im Folgenden wird die Erfindung mit Hilfe der Figuren beispielhaft näher erläutert. Es zeigen:
- Fig. 1: schematisch eine erste Ausgestaltung einer Ventilsteuerung mit zwei Nockenwellen;
- Fig. 2: den Ventilhub eines Auslassventils und eines Einlassventils in Abhängigkeit von dem Kurbelwellenwinkel bei der erfindungsgemäßen Ansteuerung einer Konfiguration gemäß Figur 1;
- Fig. 3: eine nicht zur Erfindung gehörende Ventilsteuerung mit drei Nockenwellen; und
- Fig. 4: in einer Darstellung entsprechend Figur 2 den Ventilhub eines Auslassventils und eines Einlassventils in Abhängigkeit vom Kurbelwellenwinkel bei der Ansteuerung einer nicht zur Erfindung gehörenden Konfiguration gemäß Figur 3.

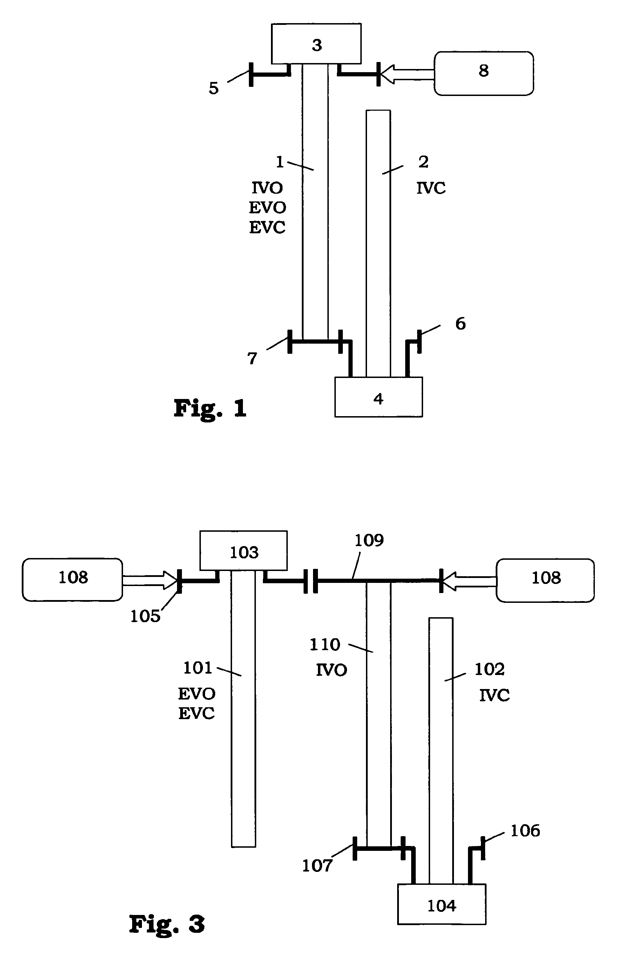

In Figur 1 ist schematisch eine erste Möglichkeit für eine erfindungsgemäße Ventilsteuerung an einem Viertakt-Ottomotor dargestellt. Diese Ventilsteuerung enthält eine erste Nockenwelle 1, deren Nocken (nicht dargestellt) das Öffnen EVO und Schließen EVC der Auslassventile einer Zylinderreihe (nicht dargestellt) sowie das Öffnen IVO der Einlassventile (nicht dargestellt) der Zylinderreihe steuern. Der Antrieb der Nockenwelle 1 erfolgt in bekannter Weise durch einen Antrieb 8, welcher ein Rad 5 antreibt. Der Antrieb 8 kann zum Beispiel ein mit der Kurbelwelle des Ottomotors gekoppelter Zahnriemen sein. Das Rad 5 ist wiederum über eine Verstelleinrichtung 3 mit der Nockenwelle 1 gekoppelt, wobei die Verstelleinrichtung 3 in bekannter Weise ausgestaltet sein kann und eine Verstellung des Phasenwinkels zwischen dem Rad 5 und der Nockenwelle 1 erlaubt.

An dem dem Rad 5 und der ersten Verstelleinrichtung 3 gegenüberliegenden Ende der Nockenwelle 1 ist ein Zahnrad 7 angeordnet, welches ein weiteres Zahnrad 6 antreibt. Letzteres Zahnrad 6 ist über eine zweite Verstelleinrichtung 4 mit der zweiten Nockenwelle 2 gekoppelt, welche sich parallel und benachbart zur ersten Nockenwelle 1 erstreckt. Die zweite Nockenwelle 2 steuert ausschließlich das Schließen IVC der Einlassventile. Aufgrund der kaskadenförmigen Anordnung der Nockenwellen 1, 2 wirkt sich eine Verstellung der Verstelleinrichtung 3 auf beide Nockenwellen aus. Die Aufspaltung des Öffnens und Schließens von Ventilen auf zwei Nockenwellen ist zum Beispiel mit Ventilmechanismen möglich, wie sie in der US 5 178 105 oder der DE 43 22 480 offenbart sind.

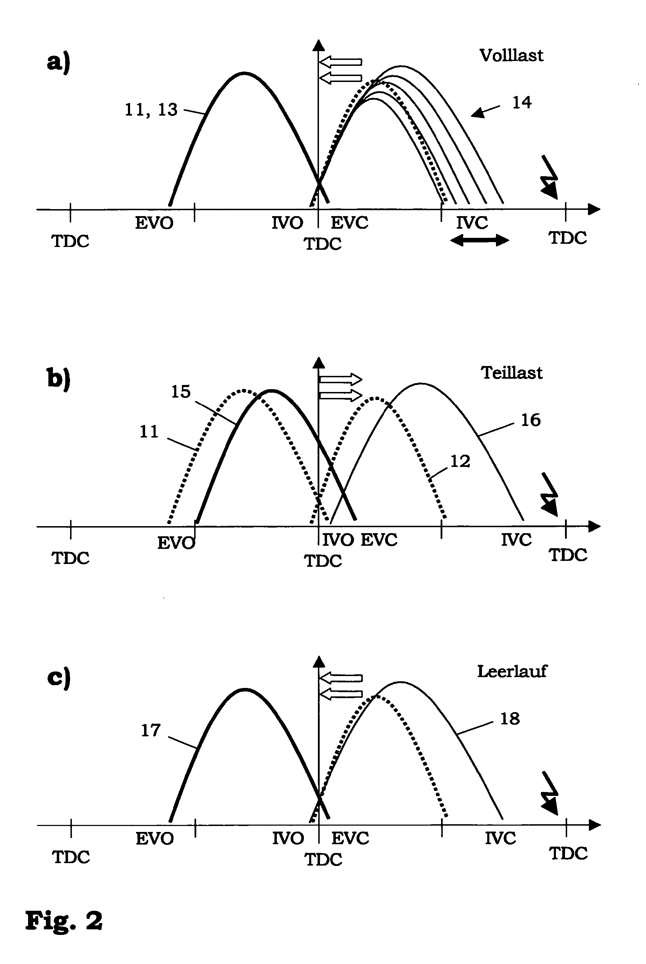

Figur 2 zeigt in drei Ventilhub-Diagrammen eine bevorzugte Art der Motorsteuerung, die mit dem in Figur 1 gezeigten System möglich ist. Das oberste Diagramm a) zeigt die Ansteuerung der Ventile bei Volllast. Das Öffnen und Schließen der Auslassventile erfolgt in diesem Falle ohne Verstellung auf der Kurve 13, welche dem Normalbetrieb dieser Ventile (gestrichelte Kurve 11 in Figur 2b) bei einem herkömmlichen Ottomotor entspricht. Da das Öffnen der Einlassventile von derselben Nockenwelle 1 wie die Auslassventile gesteuert wird, ist auch dieses unverstellt und findet kurz vor dem oberen Totpunkt TDC des Kolbens zwischen dem Ausstoßtakt und dem Ansaugtakt statt. Durch eine separate Betätigung des zweiten Verstellgliedes 4 (Figur 1) kann der Schließzeitpunkt IVC des Einlassventils entsprechend der Kurvenschar 14 variiert werden, so dass die sich im Zylinder befindliche Gemischmenge nach Bedarf eingestellt werden kann.

Figur 2b) zeigt die Ansteuerung bei Teillast des Motors. Durch eine Spätverstellung der ersten Nockenwelle 1 (Figur 1) wird das Öffnen und Schließen der Auslassventile entsprechend Kurve 15 sowie das Öffnen des Einlassventils IVO verzögert. Ferner wird das Schließen IVC des Einlassventils über die zweite Nockenwelle 2 (Figur 1) maximal verzögert, so dass sich für die Einlassventile insgesamt der Verlauf entlang der Kurve 16 ergibt. Die gestrichelte Kurve 12 zeigt den "normalen" Einlassventilhub bei einem herkömmlichen Ottomotor.

Figur 2c) zeigt die Ansteuerung im Leerlauf des Motors. Die Nockenwelle 1 wird hierbei in Frühverstellung betrieben, so dass sich die Auslassventile entsprechend der "normalen" Kurve 17 bewegen und das Öffnen des Einlassventils IVO zum Standard-Zeitpunkt stattfindet. Dies minimiert den Restgasanteil und sorgt so für einen regelmäßigen Lauf des Motors. Die zweite Nockenwelle 2 wird in Spätverstellung für ein möglichst spätes Schließen IVC des Einlassventils betrieben. Der Übergang vom Zustand nach Figur 2b) zu 2c) kann allein durch eine Betätigung der Verstelleinrichtung 3 (Figur 1) erfolgen, da die beiden Nockenwellen kaskadenförmig hieran hängen.

Figur 3 zeigt eine nicht zur Erfindung gehörende Ventilsteuerung für einen Viertakt-Ottomotor, wobei drei Nockenwellen 101, 102 und 110 parallel zueinander und benachbart angeordnet sind.

Die erste Nockenwelle 101 ist in diesem Falle nur mit den Auslassventilen gekoppelt, um deren Öffnen EVO und Schließen EVC zu steuern. Die zweite Nockenwelle 102 ist ähnlich wie bei Figur 1 nur mit den Einlassventilen gekoppelt, um deren Schließen IVC zu steuern. Die dritte Nockenwelle 110 ist ebenfalls nur mit den Einlassventilen gekoppelt, um deren Öffnen IVO zu steuern.

Die Drehung der Nockenwellen erfolgt ausgehend von einem Antrieb 108, welcher auf ein Zahnrad 109 am Ende der dritten Nockenwelle 110 und auf ein Zahnrad 105 an der ersten Nockenwelle 110 wirkt. Das Zahnrad 105 treibt über eine erste Verstelleinrichtung 103 die erste Nockenwelle 101 an.

An dem genannten Rad 109 gegenüberliegenden Ende der dritten Nockenwelle 110 weist diese ein weiteres Zahnrad 107 auf, welches mit einem Zahnrad 106 der zweiten Nockenwelle 102 zusammenwirkt. Das letztgenannte Zahnrad 106 bewirkt über die zweite Verstelleinrichtung 104 die Drehung der zweiten Nockenwelle 102.

Durch den geschilderten, nicht zur Erfindung gehörenden Aufbau wird ein sehr kompakter, gekoppelter Antrieb der drei Nockenwellen möglich, wobei die dritte Nockenwelle 110 direkt und ohne Verstellmöglichkeit mit dem Antrieb 108 gekoppelt ist, während die erste Nockenwelle 101 und die zweite Nockenwelle 102 jeweils über eigene Verstellglieder 103 beziehungsweise 104 mit der dritten Nockenwelle winkelmäßig gekoppelt sind.

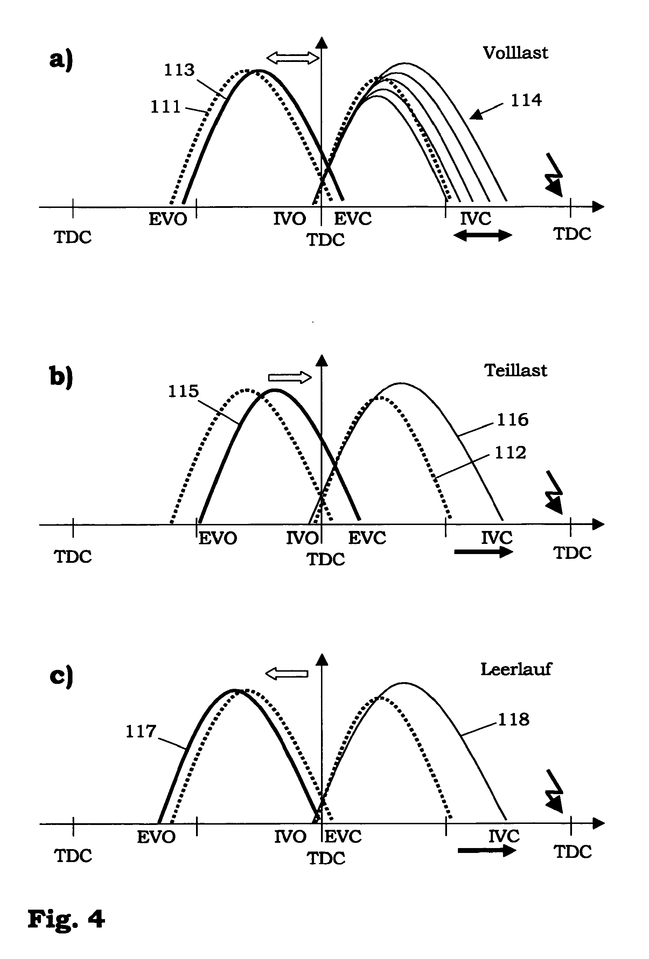

In Figur 4 sind in Ventilhub-Diagrammen die Steuerungsmöglichkeiten schematisch dargestellt, die sich mit einer nicht zur Erfindung gehörenden Ventilsteuerung entsprechend Figur 3 verwirklichen lassen.

Der Betrieb bei Volllast des Motors erfolgt gemäß Figur 4a), wobei die Steuerung der Auslassventile entsprechend der Kurve 113 stattfindet, die gegenüber der Standardkurve 111 (herkömmlicher Ottomotor) drehzahlabhängig nach spät verstellt ist. Das Schließen IVC des Einlassventils wird durch das Verstellglied 104 (Figur 3) entsprechend den Bedürfnissen der Motorleistung variiert, so dass sich die entsprechende Kurvenschar 114 ergibt. Da das Öffnen IVO der Einlassventile von der dritten Nockenwelle 110 (Figur 3) ohne eine Verstellmöglichkeit gesteuert wird, ist es in allen drei Diagrammen gegenüber der Standardkurve 112 (herkömmlicher Ottomotor) unverschoben.

Gemäß Figur 4b) wird bei Teillast das Öffnen und Schließen der Auslassventile entsprechend der Kurve 115 stärker nach spät verstellt als bei Volllast. Das Schließen IVC des Einlassventils erfolgt entsprechend der Kurve 116 ebenfalls verzögert.

Im Leerlauf (Figur 4c) wird das Öffnen und Schließen der Auslassventile entsprechend der Kurve 117 frühverstellt, um den Restgasanteil zu minimierten, während das Schließen IVC des Einlassventils gemäß der Kurve 118 wie bei Figur 4b) möglichst spät stattfindet.

## Patentansprüche

1. Viertakt-Ottomotor mit einem ersten Ventilstellglied (1) zum Öffnen (EVO) und Schliessen (EVC) der Auslassventile und zum Öffnen (IVO) der Einlassventile, wobei das erste Ventilstellglied (1) eine erste Verstelleinrichtung (3) aufweist, über welche seine Phase verstellt und damit das Öffnen (EVO) und Schliessen (EVC) der Auslassventile und das Öffnen (IVO) der Einlassventile verzögert beziehungsweise vorgezogen werden kann, und mit einem zweiten Ventilstellglied (2), das ausschließlich zum Schließen der Einlassventile (IVC) dient, vorzugsweise aller Einlassventile einer Zylinderreihe, und das eine zweite Verstelleinrichtung (4) zur Veränderung der Phasenlage des Schließzeitpunktes aufweist, wobei das erste Ventilstellglied durch eine erste Nockenwelle (1, 101) und das zweite Ventilstellglied durch eine zweite Nockenwelle (2, 102) gebildet wird,
**dadurch gekennzeichnet, dass**
eine der Nockenwellen (1) über die zugehörige Verstelleinrichtung (3) mit einem Antrieb (8) und über die andere Verstelleinrichtung (4) mit der anderen Nockenwelle (2) gekoppelt ist.

## Claims

1. Four-stroke spark-ignition engine having a first valve actuating element (1) for opening (EVO) and closing (EVC) the outlet valves and for opening (IVO) the inlet valves, with the first valve actuating element (1) having a first adjusting device (3), by means of which the phase of said first valve actuating element (1) can be adjusted and therefore the opening (EVO) and closing (EVC) of the outlet valves and the opening (IVO) of the inlet valves can be retarded or advanced, and having a second valve actuating element (2) which serves exclusively for closing the inlet valves (IVC), preferably all the inlet valves of a cylinder row, and which has a second adjusting device (4) for varying the phase position of the closing time, with the first valve actuating element being formed by a first camshaft (1, 101) and the second valve actuating element being formed by a second camshaft (2, 102),
**characterized in that**
one of the camshafts (1) is coupled by means of the associated adjusting device (3) to a drive (8) and by means of the other adjusting device (4) to the other camshaft (2).

## Revendications

1. Moteur à quatre temps à allumage par étincelles, comprenant un premier organe de soupape (1) pour ouvrir (EVO) et fermer (EVC) les soupapes d'échappement et pour ouvrir (IVO) les soupapes d'admission, le premier organe de soupape (1) présentant un premier dispositif de réglage (3) par le biais duquel sa phase peut être réglée et donc l'ouverture (EVO) et la fermeture (EVC) des soupapes d'échappement et l'ouverture (IVO) des soupapes d'admission peuvent être retardées respectivement avancées, et comprenant un deuxième organe de soupape (2) qui sert exclusivement à fermer les soupapes d'admission (IVC), de préférence toutes les soupapes d'admission d'une rangée de cylindres, et qui présente un deuxième dispositif de réglage (4) pour modifier la position de phase de l'instant de fermeture, le premier organe de soupape étant formé par un premier arbre à cames (1, 101) et le deuxième organe de soupape étant formé par un deuxième arbre à cames (2, 102),
**caractérisé en ce que**
l'un des arbres à cames (1) est accouplé par le biais du dispositif de réglage associé (3) à un entraînement (8) et est accouplé par le biais de l'autre dispositif de réglage (4) à l'autre arbre à cames (2).
